# EUROPEAN PATENT APPLICATION

(11) **EP 4 756 241 A1**
(43) Date of publication of application: **10.06.2026**
(21) Application number: 23947844.9
(22) Date of filing: 04.08.2023
(51) Int. Cl.: F16B 21/08, F16B 5/00, F16B 2/02

(54) **DUAL LOCK FASTENER CONNECTING STRUCTURE**

(71) Applicant: 3M Innovative Properties Company, Saint Paul, Minnesota 55133-3427 (US)
(72) Inventor: JIA, Baohe, Shanghai 200233 (CN); SHA, Xiaomin, Shanghai 200233 (CN); LI, Yao, Shanghai 200233 (CN)
(74) Representative: Mathys & Squire
(86) International application number: PCT/CN2023/111203
(87) International publication number: WO 2025/030257

(57) **Abstract**

The present invention provides a mushroom fastener coupling structure, including: a base and a protruding leg, wherein the base includes a first surface and a second surface opposite to each other, and the first surface of the base is configured to be connected to an upper mushroom fastener or a lower mushroom fastener of a mushroom fastener; the protruding leg is provided on the second surface of the base, and side surfaces of the protruding leg are provided with opposite clips; and an accommodating space is formed between each clip and the second surface of the base, wherein a height of the accommodating space in a vertical direction along the second surface of the base is adjustable. Thus, a sheet-metal part can be engaged in the accommodating space, and the height of the accommodating space is adjusted according to the thickness of the sheet-metal part.

## Description

### TECHNICAL FIELD

The present invention relates to the field of mushroom fastener mounting auxiliary fixtures, and in particular to a mushroom fastener coupling structure particularly suitable for a vehicle sunroof.

### BACKGROUND ART

A sunroof is mounted on the top of a vehicle such as a commercial SUV or a passenger car, and the vehicle sunroof is mounted on the roof of the vehicle, which can effectively circulate the air in the vehicle and increase the intake of fresh air. On the one hand, the need for ventilation can be met. On the other hand, the vehicle sunroof can also provide a wider field of view and meet the requirements for mobile photography and videography.

At present, the fixing of glass of a vehicle sunroof is generally achieved using mushroom fasteners, which can connect a sunroof frame to a roof body. In addition, a headliner is also mounted on the top sunroof of the vehicle. In order to firmly mount the headliner, the fit clearance between the periphery of the opening of the sunroof and the headliner of the sunroof is uniform, and the outer surface of the headliner cannot have exposed mounting points. Paired mushroom fasteners are usually arranged on the headliner and the sunroof, and the mushroom fasteners are attached to the bracket of the headliner and sheet metal at a corresponding position of the sunroof. Therefore, mushroom fasteners are widely used in automobile manufacturing, especially in sunroof-related structures.

At present, when manufacturing a sunroof, it is necessary to mount a mushroom fastener on a sliding rail or a sheet-metal part at a corresponding position of the sunroof. When mounting the mushroom fastener, the fastener is usually mounted manually by a production worker. The distance between the mounted mushroom fastener and the sheet-metal part has a precise size requirement, but the thickness of the sheet-metal part is often different for different vehicles or even different parts of the same vehicle. Therefore, this results in varying distances between the mushroom fastener and the sheet-metal part, which can easily lead to detachment and also increases the complexity of manual mounting.

Therefore, it is necessary to develop a coupling structure for a vehicle sunroof mushroom fastener, which can be stably and conveniently mounted on a vehicle sheet-metal part, and is particularly suitable for sheet-metal parts with different thicknesses.

### SUMMARY

In view of the problems mentioned in the background art, one of the objects of the present invention is to provide a mushroom fastener coupling structure, which can be stably and conveniently mounted and fixed on a structure to be fixed, such as a sheet-metal part or a similar plate-shaped member (such as a vehicle sheet-metal part, hereinafter collectively referred to as "sheet-metal part" or "structure to be fixed"), and is particularly suitable for sheet-metal parts with different thicknesses, so that a mushroom fastener can be fixed on the sheet-metal part through the mushroom fastener coupling structure.

The above object of the present invention is achieved by means of the following technical solution: A mushroom fastener coupling structure, comprising: a base and a protruding leg, wherein the base comprises a first surface and a second surface opposite to each other, and the first surface of the base is configured to be connected to an upper mushroom fastener or a lower mushroom fastener of a mushroom fastener; the protruding leg is provided on the second surface of the base, and side surfaces of the protruding leg are provided with opposite clips; and an accommodating space is formed between each clip and the second surface of the base, wherein a height of the accommodating space in a vertical direction along the second surface of the base is adjustable. Thus, a sheet-metal part can be engaged in the accommodating space, and the height of the accommodating space is adjusted according to the thickness of the sheet-metal part.

Optionally, in an implementation, the second surface of the base is further provided with an elastic structure, and the elastic structure is configured to maintain a first distance from a lowermost end of each clip in a first state, and to have a second distance from the lowermost end of the clip in a second state, wherein the second distance is different from the first distance. The height of the accommodating space can be easily adjusted by means of the elastic structure.

Optionally, in a specific embodiment, the elastic structure comprises at least two supporting elements. In another specific embodiment, the elastic structure comprises a spring provided around a root portion of the protruding leg.

The present invention has the following beneficial effect: The height of the accommodating space of the mushroom fastener coupling structure of the present invention can be adjusted according to the thickness of the sheet-metal part to facilitate adaptation to sheet-metal parts with different thicknesses.

### BRIEF DESCRIPTION OF THE DRAWINGS

In order to explain the technical solutions of embodiments of the present invention more clearly, the drawings to be used in the description of the embodiments will be briefly described below. It is apparent that the following drawings merely show some embodiments of the present invention by way of example. For those of ordinary skill in the art, other drawings can further be obtained based on these drawings without any inventive effort. Moreover, these drawings should not be construed as imposing any limitations on the present invention.
FIG. 1 is a schematic view of a mushroom fastener coupling structure 100 according to an embodiment of the present invention;
FIG. 2 is a side schematic view of the mushroom fastener coupling structure 100 shown in FIG. 1;
FIG. 3 is a schematic view of a mushroom fastener coupling structure 200 according to another embodiment of the present invention;
FIG. 4 is a schematic view of the mushroom fastener coupling structure 200 shown in FIG. 3 when mounted and used; and

FIG. 5 is an exemplary schematic view of a mushroom fastener coupling structure according to an embodiment of the present invention during use.

### DETAILED DESCRIPTION

It should be noted that the following embodiments are exemplary illustrations of the present invention. Features in different embodiments can be combined with each other without conflict. The present invention will be described in detail below with reference to the drawings and specific embodiments.

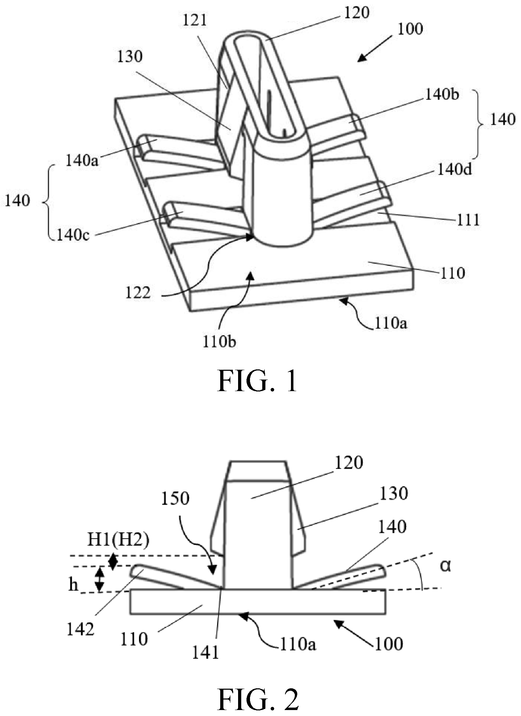

Schematic views of a mushroom fastener coupling structure 100 according to an embodiment of the present invention are shown in FIGS. 1 and 2. The mushroom fastener coupling structure 100 includes a base 110 and a protruding leg 120, wherein the base 110 includes a first surface 110a and a second surface 110b opposite to each other, and the first surface 110a of the base 110 is configured to be connected to an upper mushroom fastener or a lower mushroom fastener (not shown) of a mushroom fastener. The protruding leg 120 is provided on the second surface 110b of the base 110, and side surfaces 121 of the protruding leg 120 are provided with opposite clips 130. An accommodating space 150 is formed between each clip 130 and the second surface 110b of the base 110.

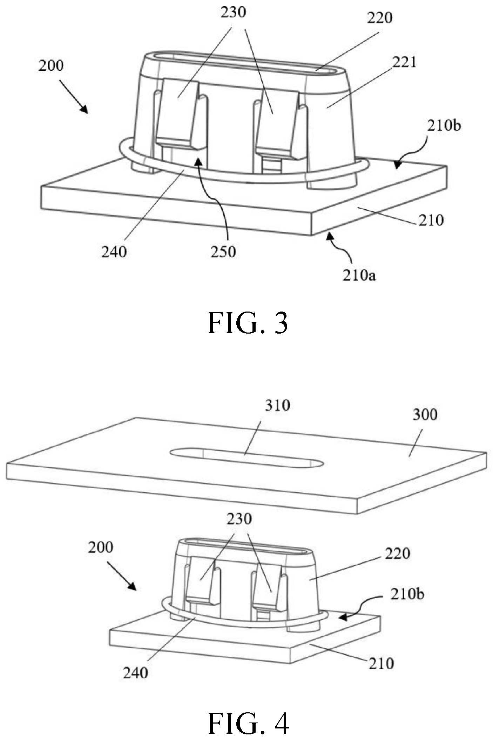

When the mushroom fastener coupling structure 100 is used, the mushroom fastener coupling structure 100 is usually fixed on a structure to be fixed, such as a sheet-metal part or a similar plate-shaped member (as shown in FIG. 4, hereinafter collectively referred to as "sheet-metal part" or "structure to be fixed"). It can be understood that the sheet-metal part has an opening through which the protruding leg 120 can pass. The protruding leg 120 may be a conventional arrangement in the art, as long as the same can pass through the opening on the sheet-metal part and fix the mushroom fastener coupling structure 100 on the sheet-metal part. In addition, the sheet-metal part is engaged in the accommodating spaces 150 along a thickness direction thereof, and is clamped between the second surface 110b of the base 110 and the clips 130.

For example, the structure of the protruding leg 120 may be a protruding three-dimensional structure perpendicular to the second surface 110b of the base 110. One or more clips 130 are provided on each opposite side surface 121 of the protruding leg 120. Optionally, each clip 130 protrudes out of the side surface of the protruding leg 120 in a natural state, and may approach the side surface of the protruding leg 120 under a certain external force, or even be located on the same plane as a side surface portion of an adjacent protruding leg 120. The sheet-metal part generally has a corresponding opening, the protruding leg 120 of the mushroom fastener coupling structure passes through the opening, and the sheet-metal part is engaged in the accommodating space 150 between the clip 130 of the protruding leg 120 and the second surface 110b of the base 110. In addition, the protruding leg 120 may be fixed on the sheet-metal part by the clip 130. Thus, the clip 130 has a dual function.

In a different embodiment, the protruding leg 120 may also be fixed on the sheet-metal part by other structures. For example, the clip 130 may be a rib-shaped structure provided at a lower portion of a side surface of the protruding leg 120, and only has a function of engaging the sheet-metal part in the accommodating space 150 between the clip 130 of the protruding leg 120 and the second surface 110b of the base 110. Another engaging structure is provided at an upper portion of the side surface of the protruding leg 120 to fix the mushroom fastener coupling structure on the sheet-metal part.

Further, the mushroom fastener coupling structure 100 is further provided with an elastic structure 140, and the elastic structure 140 is provided between the second surface 110b of the base 110 and the clips 130, or the elastic structure 140 is provided between the second surface 110b of the base 110 and the side surfaces of the protruding leg 120. Moreover, the elastic structure 140 is configured to maintain a first distance H1 from the lowermost end of each clip 130 in a first state, and to have a second distance H2 from the lowermost end of the clip 130 in a second state, wherein the second distance H2 is different from the first distance H1. The first distance H1 and the second distance H2 refer to the distance, in the placement direction shown in FIGS. 1 and 2, between the highest point of the elastic structure 140 and the lowest point of the clip 130 in different states, respectively. For example, the first state refers to a state in which the mushroom fastener coupling structure 100 is not used. The second state correspondingly refers to a state in which the mushroom fastener coupling structure 100 is in use, for example, the mushroom fastener coupling structure 100 is engaged with a structure to be fixed, such as a sheet-metal part, and a downward external force is applied to the elastic structure 140 due to the gravity of the structure to be fixed, so that the elastic structure 140 is in a compressed state. In this case, the second distance H2 is greater than or equal to the first distance H1. Moreover, for different sheet-metal parts, the specific value of the second distance H2 is different. In this embodiment, the height of the accommodating space 150 formed between each clip 130 and the second surface 110b of the base 110 may be understood as being equivalent to the first distance H1 in the first state, and as being equivalent to the second distance H2 in the second state. The height of the accommodating space 150 is adjusted by adjusting the elastic structure 140 to be in different states or positions.

In the embodiment shown in FIGS. 1 and 2, the elastic structure 140 includes four supporting elements 140a, 140b, 140c and 140d, wherein the supporting elements 140a and 140b are oppositely provided on opposite side surfaces of the protruding leg 120, respectively; the supporting elements 140c and 140d are oppositely provided on opposite side surfaces of the protruding leg 120, respectively; and the supporting elements 140a, 140b, 140c and 140d are symmetrically provided around the protruding leg 120. First ends of the supporting elements 140a, 140b, 140c and 140d are separately provided at a root portion 122 of the protruding leg 120. In a different embodiment, there may be 2, 6, or more supporting elements as needed. In order to make the mushroom fastener coupling structure 100 in a better balanced state, preferably, the number of supporting elements is an even number, and the supporting elements are oppositely provided on opposite side surfaces of the protruding leg 120 in a balanced manner, respectively.

In the embodiment shown in FIGS. 1 and 2, the supporting elements 140a, 140b, 140c and 140d are sheet-like structures, a first end 141 of each sheet-like structure is fixed on the second surface 110b of the base 110 and connected to the root portion 122 of the protruding leg 120, and a second end 142 of the sheet-like structure has a third distance h from the second surface 110b of the base 110. The supporting elements 140a, 140b, 140c and 140d each have an included angle with the second surface 110b of the base 110, and the included angle is between 10 degrees and 45 degrees in the first state.

Preferably, corresponding grooves 111 are provided on the second surface 110b of the base 110 to accommodate the supporting elements 140a, 140b, 140c and 140d. Thus, the supporting elements 140a, 140b, 140c and 140d may move toward the base 110 under an external force, such as a downward external force. If the supporting elements 140a, 140b, 140c and 140d are subjected to a sufficient external force, the same may be pressed into the corresponding grooves 111, respectively.

Thus, the height of the accommodating space 150 in a vertical direction along the second surface is adjustable by adjusting the distance between the elastic structure 140 (such as the supporting elements 140a, 140b, 140c and 140d) and the clip 130 under an external force, and may be between H1 and H1 + h. Thus, the accommodating space 150 between each clip 130 and the base can accommodate sheet-metal parts with different thicknesses, so that the mushroom fastener coupling structure can adapt to sheet-metal parts with different thicknesses within a certain range.

In a specific embodiment, the thickness of the base 110 is about 3 mm, the thickness of the supporting elements having the sheet-like structure is between 1 mm and 2 mm, and in the first state, the third distance h between the second end 142 of each sheet-like structure and the second surface 110b of the base 110 is between 3 mm and 5 mm. Thus, compared with a conventional mushroom fastener coupling structure, the thickness of a sheet-metal part adapted to the mushroom fastener coupling structure of this embodiment can be increased by a range of 3 to 5 mm.

Each supporting element has an included angle with the second surface 110b of the base 110, and based on the strength of the supporting element and the experience of the inventors, the included angle is preferably between 10 degrees and 45 degrees in the first state.

Preferably, the supporting element is made of at least one of the following materials based on the strength of the elastic structure: polypropylene, nylon, polyethylene terephthalate, polybutylene terephthalate, a polycarbonate, an acrylonitrile-butadiene-styrene copolymer, and an acrylic resin.

FIGS. 3 and 4 are schematic views of a mushroom fastener coupling structure 200 according to another embodiment of the present invention. The mushroom fastener coupling structure 200 includes a base 210 and a protruding leg 220, wherein the base 210 includes a first surface 210a and a second surface 210b opposite to each other, and the first surface 210a of the base 210 is configured to be connected to an upper mushroom fastener or a lower mushroom fastener (not shown) of a mushroom fastener. The protruding leg 220 is provided on the second surface 210b of the base 210, and side surfaces 221 of the protruding leg 220 are provided with opposite clips 230. These structures may be the same as or similar to those in the embodiment shown in FIGS. 1 and 2, and thus will not be repeated.

Further, an accommodating space 250 is formed between each clip 230 and the second surface 210b of the base 210. The second surface 210b of the base 210 is further provided with an elastic structure 240, and the elastic structure 240 is provided between the second surface 210b of the base 210 and the side surfaces of the protruding leg 220. The elastic structure is configured to maintain a first distance from the lowermost end of each clip 230 in a first state, and to have a second distance from the lowermost end of the clip 230 in a second state, wherein the second distance is different from the first distance. Preferably, the second distance is greater than the first distance. The elastic structure 240 includes a spring, the spring is provided around a root portion of the protruding leg 220, and at least a part of the elastic structure 240 is in contact with the root portion of the protruding leg 220. At least two different positions on a cross section of the spring are at different distances from the second surface 210b of the base 210.

Specifically, the spring may be a curved spring as shown in FIG. 3 or 4, such as a disc spring known in the art. Of course, it may also, as needed, be a single spring or multiple springs stacked together, or a multi-turn coil spring. The specific form of the spring is not particularly limited, as long as the distance between the spring and the lowermost end of each clip 230 can be changed after being subjected to an external force. Thus, the height of the accommodating space 250 capable of accommodating the sheet-metal part in the vertical direction along the second surface 210 is adjustable.

As shown in FIG. 4, when the mushroom fastener coupling structure 200 is used, the mushroom fastener coupling structure 200 is usually fixed to a sheet-metal part 300 or a structure to be fixed like a plate-like member, wherein the sheet-metal part 300 has an opening 310. The protruding leg 220 of the mushroom fastener coupling structure 200 passes through the opening 310, and the sheet-metal part 300 is engaged between the clips 230 of the protruding leg 220 and the second surface 210b of the base 210. The elastic structure 240 is pressed against the second surface 210b of the base 210 by the sheet-metal part 300, and is deformed by the downward pressure generated by the weight of the sheet-metal part 300. Therefore, the distance between the elastic structure 240 and each clip 230 is increased, that is, the distance between the elastic structure 240 and the clip 230 is adjustable. That is, the height of the accommodating space 250 capable of accommodating the sheet-metal part in the vertical direction along the second surface 210 is adjustable. Therefore, sheet-metal parts 300 with different thicknesses can be accommodated between the clip 230 and the second surface 210b of the base 210, so that the mushroom fastener coupling structure can adapt to the sheet-metal parts with different thicknesses. Compared with the mushroom fastener coupling structure in the prior art which can only adapt to a sheet-metal part with a specific thickness, the mushroom fastener coupling structure provided by the embodiments of the present invention has wider adaptability and mounting convenience, and the rebound force of the elastic structure 240 also enables the elastic structure 240 to have an upward supporting force on the sheet-metal part 300, so that the coupling between the mushroom fastener coupling structure and the sheet-metal part is more stable. Although the mushroom fastener coupling structure 200 is used as an example to describe the usage thereof in the embodiment shown in FIG. 4, the description also applies to the mushroom fastener coupling structures of other embodiments.

Mushroom fastener coupling structures with different specific configurations are introduced in FIGS. 1, 2, 3 and 4, respectively, and are used to enable the height of the accommodating space of the mushroom fastener coupling structure in the vertical direction along the second surface of the base to be adjustable, so that the mushroom fastener coupling structure can be adapted to sheet-metal parts with different thicknesses. It can be understood that, motivated by the present invention, especially the two specific embodiments, other different specific structures are also possible. For example, the clip of the protruding leg may be configured to be slidable up and down, so as to adjust the height of the accommodating space in the vertical direction along the second surface of the base.

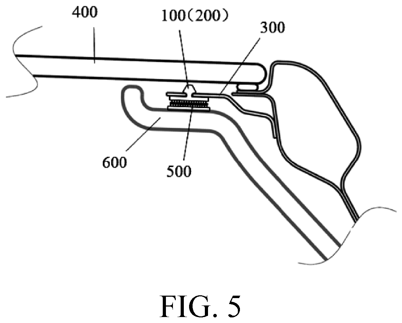

FIG. 5 is an exemplary schematic view of a mushroom fastener coupling structure according to an embodiment of the present invention during use. The mushroom fastener coupling structure 100 or 200 is used on a sheet-metal part of a vehicle roof sunroof for fixing a vehicle roof interior trim 600 such as a sunroof headliner to the sheet-metal part of the roof sunroof by means of a mushroom fastener. A sheet-metal part 300 such as a sunroof reinforcing frame or a sunroof frame is provided around the vehicle roof sunroof 400. The mushroom fastener coupling structure 100 or 200 is engaged in an opening on the sheet-metal part 300 through the opening, and an upper mushroom fastener of a mushroom fastener 500 is connected to the first surface of the base of the mushroom fastener coupling structure 100 or 200, so that the upper mushroom fastener and the sunroof sheet-metal part 300 are connected together. A lower mushroom fastener of the mushroom fastener 500 is engaged with the upper mushroom fastener. The lower mushroom fastener of the mushroom fastener 500 is coupled to the vehicle roof interior trim 600 such as the sunroof headliner. The vehicle roof interior trim 600 and the sunroof sheet-metal part 300 are coupled together by the engagement between mushroom fasteners 500, so that the vehicle roof interior trim is fixed on the vehicle body. The described structure is convenient and simple to manufacture and assemble, with high efficiency and excellent stability and reliability. The manufacturing costs and the mounting costs are relatively low. Moreover, male and female fasteners are separable, allowing for remounting. More importantly, because sheet-metal parts with different thicknesses can be accommodated between the clips of the mushroom fastener coupling structure and the second surface of the base, the mushroom fastener coupling structure can be adapted to the sheet-metal parts with different thicknesses.

Although the mushroom fastener coupling structure provided by the embodiment of the present disclosure is described in conjunction with the application scenario in which the mushroom fastener coupling structure is used in the sheet-metal part of the vehicle, it can be understood that the mushroom fastener coupling structure can also be used in other fields in which mushroom fasteners can be used.

It can be understood that the embodiments described above are only used to describe rather than to limit the present invention. Those skilled in the art can understand that the present invention can be modified and varied without departing from the spirit and scope of the present invention. The above modifications and variations are deemed to be within the scope of the present invention and the appended claims. The scope of protection of the present invention is subject to the appended claims. Furthermore, any reference numerals in the claims shall not be construed as limiting the present invention. The verb "comprise" and conjugations thereof does not exclude the presence of elements or steps other than those stated in a claim. The indefinite article "a" or "an" preceding an element or step does not exclude the presence of a plurality of such elements or steps.

## Claims

1. A mushroom fastener coupling structure, comprising:
a base, the base comprising a first surface and a second surface opposite to each other, and the first surface being configured to be connected to an upper mushroom fastener or a lower mushroom fastener of a mushroom fastener; and
a protruding leg, the protruding leg being provided on the second surface of the base, a side surface of the protruding leg being provided with a clip, and an accommodating space being formed between the clip and the second surface of the base;
wherein a height of the accommodating space in a vertical direction along the second surface of the base is adjustable.

2. The mushroom fastener coupling structure according to claim 1, further comprising an elastic structure, the elastic structure being provided between the second surface of the base and the clip, or the elastic structure being provided between the second surface of the base and the side surface of the protruding leg; and the elastic structure being configured to have a first distance from a lowermost end of the clip in a first state and a second distance from the lowermost end of the clip in a second state, wherein the second distance is different from the first distance so that the height of the accommodating space is adjustable.

3. The mushroom fastener coupling structure according to claim 2, wherein the second distance is greater than the first distance.

4. The mushroom fastener coupling structure according to claim 2, wherein at least a part of the elastic structure is in contact with a root portion of the protruding leg.

5. The mushroom fastener coupling structure according to claim 2, wherein the elastic structure comprises at least two supporting elements.

6. The mushroom fastener coupling structure according to claim 5, wherein first ends of the supporting elements are each provided at a root portion of the protruding leg, and the at least two supporting elements are symmetrically provided around the protruding leg.

7. The mushroom fastener coupling structure according to claim 5, wherein each supporting element and the second surface of the base have an included angle, and the included angle is between 10 degrees and 45 degrees in the first state.

8. The mushroom fastener coupling structure according to one of claims 5 to 7, wherein each supporting element is a sheet-like structure, a first end of the sheet-like structure is fixed to the second surface of the base and is connected to a root portion of the protruding leg, and a second end of the sheet-like structure has a third distance from the second surface of the base.

9. The mushroom fastener coupling structure according to claim 8, wherein the sheet-like structure has a thickness between 1 mm and 2 mm.

10. The mushroom fastener coupling structure according to claim 8, wherein in the first state, the third distance between the second end of the sheet-like structure and the second surface of the base is between 3 mm and 5 mm.

11. The mushroom fastener coupling structure according to one of claims 5 to 7, wherein the second surface of the base is provided with corresponding grooves to accommodate the supporting elements.

12. The mushroom fastener coupling structure according to claim 5, wherein the supporting elements are made of at least one of the following materials: polypropylene, nylon, polyethylene terephthalate, polybutylene terephthalate, a polycarbonate, an acrylonitrile-butadiene-styrene copolymer, and an acrylic resin.

13. The mushroom fastener coupling structure according to one of claims 2 to 4, wherein the elastic structure comprises a spring, and the spring is provided around a root portion of the protruding leg.

14. The mushroom fastener coupling structure according to claim 13, wherein at least two different positions on a cross-section of the spring are at different distances from the second surface of the base.
